# EUROPÄISCHE PATENTSCHRIFT

(11) **EP 3 465 090 B1**
(45) Veröffentlichungstag und Bekanntmachung des Hinweises auf die Patenterteilung: **29.07.2020**
(21) Anmeldenummer: 17713911.0
(22) Anmeldetag: 23.03.2017
(51) Int. Cl.: G01C 21/32, G01B 21/30, G08G 1/01

(54) **VERFAHREN ZUM BEREITSTELLEN EINER FAHRZEUGTRAJEKTORIENINFORMATION UND VERFAHREN ZUM ORTEN EINES SCHLAGLOCHS**
METHOD FOR PROVIDING VEHICLE TRAJECTORY INFORMATION AND METHOD FOR DETERMINING THE LOCATION OF A POTHOLE
PROCÉDÉ POUR FOURNIR UNE INFORMATION DE TRAJECTOIRE DE VÉHICULE ET PROCÉDÉ POUR LOCALISER UN NID DE POULE

(30) Priorität: 23.05.2016 DE 102016208883
(43) Veröffentlichungstag der Anmeldung: 10.04.2019
(73) Patentinhaber: Robert Bosch GmbH, 70442 Stuttgart (DE)
(72) Erfinder: SCHROEDER, Gernot, 71636 Ludwigsburg (DE); ROHDE, Jan, 70192 Stuttgart (DE); PAGEL, Michael, 75378 Bad Liebenzell (DE); HOFSAESS, Volker, 71696 Moeglingen (DE); MUELLER, Martin, 70376 Stuttgart - Bad Cannstatt (DE); LEHNER, Philipp, 75417 Muehlacker (DE)
(86) Internationale Anmeldenummer: PCT/EP2017/056936
(87) Internationale Veröffentlichungsnummer: WO 2017/202522

(56) Entgegenhaltungen:
- EP-A2- 2 687 818
- DE-A1-102014 207 084
- US-A1- 2012 143 489
- US-B2- 7 421 334

## Beschreibung

### Stand der Technik

Der Ansatz geht aus von einer Vorrichtung oder einem Verfahren nach Gattung der unabhängigen Ansprüche. Gegenstand des vorliegenden Ansatzes ist auch ein Computerprogramm.

Das Wissen um Schlaglöcher ist sowohl für Infrastrukturbetreiber wie Städte und Gemeinden als auch für individuelle Fahrer interessant. Für Infrastrukturbetreiber sind diese Informationen relevant, um den Fahrbahn-/Brückenzustand zu ermitteln und gegebenenfalls kurzfristige Reparaturmaßnahmen oder Instandsetzungsmaßnahmen einzuleiten. Ohne Vorabinformationen über mögliche Infrastrukturschäden sind das Abfahren und die Überprüfung großer Teile oder der gesamten Infrastruktur notwendig.

Die US 2009/0097038 A1 beschreibt ein Erkennen von Schlaglöchern mittels Videoerkennung. Weiter ist aus der DE 10 2014 207 084 A1 ein Verfahren zur Erfassung von Straßenschäden bekannt, bei dem die von einem Fahrzeug gemessenen Beschleunigungswerte mit schadenstypischen Beschleunigungsprofilen verglichen werden. Ähnlich offenbart die EP 2 687 818 A2 ein Verfahren zur Kartierung von Straßenzuständen, bei der Beschleunigungsmesssignale von Fahrzeugen ausgewertet werden. Die US 7 421 334 B2 zeigt weiterhin eine Fahrzeug-On-Board Plattform zum Sammeln von Daten zur Transportinfrastruktur.

### Offenbarung der Erfindung

Vor diesem Hintergrund werden mit dem hier vorgestellten Ansatz ein Verfahren zum Bereitstellen einer Fahrzeugtrajektorieninformation und ein Verfahren zum Orten eines Schlaglochs, weiterhin eine Vorrichtung, die die Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der in den unabhängigen Ansprüchen angegebenen Verfahren möglich.

Die mit dem hier vorgestellten Ansatz erreichbaren Vorteile bestehen darin, dass Positionen von Schlaglöchern auch ohne eine unmittelbare Nähe eines Fahrzeugs zu den Schlaglöchern für einen Fahrer des Fahrzeugs angezeigt werden können. So kann der Fahrer frühzeitig vor einer bevorstehenden Überfahrt über die Schlaglöcher informiert werden.

Es wird ein Verfahren zum Bereitstellen einer Fahrzeugtrajektorieninformation vorgestellt. Das Verfahren umfasst einen Schritt des Einlesens, in dem zumindest eine Inertialinformation eingelesen wird, die zumindest einen Parameter einer Bewegung eines Fahrzeugs während einer Fahrt anzeigt. Das Verfahren umfasst weiterhin einen Schritt des Einlesens, in dem eine Ortsinformation erfasst wird, die die Position des Fahrzeugs während der Bewegung anzeigt. In einem Schritt des Bestimmens wird die Fahrzeugtrajektorieninformation unter Verwendung der Inertialinformation und der Ortsinformation bestimmt, wobei die Fahrzeugtrajektorieninformation die Bewegung des Fahrzeugs an der Position repräsentiert.

Dieses Verfahren kann beispielsweise in Software oder Hardware oder in einer Mischform aus Software und Hardware beispielsweise in einem Steuergerät implementiert sein.

Die anhand des Verfahrens bestimmbaren Fahrzeugtrajektorieninformationen können dazu dienen, um in beispielsweise einem weiteren Verfahren mit einer Referenzinformation verglichen zu werden. Wenn die Referenzinformation beispielsweise eine vorbestimmte Bewegung des Fahrzeugs an der Position bei einer schlaglochfreien Fahrbahn repräsentiert, kann das Ergebnis des Vergleichs der Fahrzeugtrajektorieninformationen mit der Referenzinformation Aufschluss darüber gegeben, ob sich an den Positionen der Fahrzeugtrajektorieninformationen Schlaglöcher befinden, oder nicht.

Der Parameter kann eine horizontale Bewegung anzeigen, diese kann beispielsweise durch eine Ausweichbewegung wie eine Lenkbewegung des Fahrers des Fahrzeugs zur Vermeidung eines Schlaglochs verursacht werden.

Gemäß einer Ausführungsform kann der Parameter zusätzlich oder alternativ eine vertikale Bewegung des Fahrzeugs anzeigen. Die vertikale Bewegung kann beispielsweise während einer Bremsbewegung und/oder während einer Ausschlagbewegung bei einer Überfahrt des Fahrzeugs über ein Schlagloch verursacht werden.

Die Ortsinformation kann eine mittels beispielsweise eines GPS-Sensors bestimmte Position repräsentieren. Das globale Positionsbestimmungssystem GPS zur Positionsbestimmung ist weitläufig bekannt und vertreten.

Der hier vorgestellte Ansatz schafft ferner eine Vorrichtung, die ausgebildet ist, um die Schritte einer Variante eines hier vorgestellten Verfahrens zum Bereitstellen einer Fahrzeugtrajektorieninformation in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

In einer vorteilhaften Ausgestaltung erfolgt durch die Vorrichtung eine Steuerung einer Bereitstellungseinrichtung. Hierzu kann die Vorrichtung beispielsweise auf Sensorsignale wie Inertialsignale und Ortungssignale zugreifen. Die Ansteuerung erfolgt über Aktoren wie einen Inertialsensor und einen Ortungssensor wie beispielsweise einen GPS-Sensor.

Es wird ein Verfahren zum Orten eines Schlaglochs vorgestellt. Das Verfahren umfasst einen Schritt des Einlesens, in dem eine erste Fahrzeugtrajektorieninformation eingelesen wird, die eine erste Bewegung eines ersten Fahrzeugs an einer Position repräsentiert. In einem weiteren Schritt des Einlesens wird zumindest eine zweite Fahrzeugtrajektorieninformation eingelesen, die eine zweite Bewegung des ersten Fahrzeugs oder eines zweiten Fahrzeugs an der Position repräsentiert. Da es unwahrscheinlich ist, dass die erste Bewegung und die zweite Bewegung an exakt derselben Position stattfinden, kann die Position beispielsweise einen festgelegten Streckenabschnitt repräsentieren. In einem Schritt des Vergleichens wird die erste Fahrzeugtrajektorieninformation mit zumindest einer Referenztrajektorieninformation verglichen, um eine erste Schlaglochinformation zu bestimmen. Weiterhin wird in einem Schritt des Vergleiches die zweite Fahrzeugtrajektorieninformation mit der zumindest einen Referenztrajektorieninformation verglichen, um eine zweite Schlaglochinformation zu bestimmen. In einem letzten Schritt des Bereitstellens wird eine Ortungsinformation bereitgestellt, die eine Position eines georteten Schlaglochs anzeigt, wenn die erste Schlaglochinformation und die zweite Schlaglochinformation ein Schlagloch anzeigen.

Das vorgestellte Verfahren kann Positionen von Straßenschäden bereits vor der Wahrnehmbarkeit durch beispielsweise Fahrzeugsensoren von Fahrzeugen erkennen und kann diese dann anhand der Ortungsinformation z. B. Fahrzeugsystemen von Fahrzeugen zur Verfügung stellen.

Eine Referenztrajektorieninformation kann eine vorbestimmte Bewegung des Fahrzeugs an der Position bei einer schlaglochfreien Fahrbahn repräsentieren, in diesem Fall wird die erste Schlaglochinformation und/oder die zweite Schlaglochinformation bestimmt, wenn die erste Fahrzeugtrajektorieninformation und/oder die zweite Fahrzeugtrajektorieninformation bei dem Vergleichen vorteilhafterweise innerhalb eines Toleranzbereichs nicht mit der Referenztrajektorieninformation übereinstimmt. Die Ortungsinformation wird in diesem Fall bereitgestellt, wenn sowohl das Ergebnis des Vergleichs der ersten Fahrzeugtrajektorieninformation mit der Referenztrajektorieninformation als auch das Ergebnis des Vergleichs der zweiten Fahrzeugtrajektorieninformation mit der Referenztrajektorieninformation keine Übereinstimmung anzeigen.

Eine Referenztrajektorieninformation kann auch eine Ausweichtrajektorie repräsentieren, die beispielsweise durch eine Lenkbewegung des Fahrers erzeugt werden kann. In diesem Fall wird die erste Schlaglochinformation und/oder die zweite Schlaglochinformation bestimmt, wenn die erste Fahrzeugtrajektorieninformation und/oder die zweite Fahrzeugtrajektorieninformation bei dem Vergleichen mit der Referenztrajektorieninformation übereinstimmt. Die Ortungsinformation wird in diesem Fall bereitgestellt, wenn sowohl das Ergebnis des Vergleichs der ersten Fahrzeugtrajektorieninformation mit der Referenztrajektorieninformation als auch das Ergebnis des Vergleichs der zweiten Fahrzeugtrajektorieninformation mit der Referenztrajektorieninformation eine Übereinstimmung anzeigen.

Alternativ oder zusätzlich zu der Ausweichtrajektorie kann eine Referenztrajektorieninformation auch eine Schlaglochüberfahrttrajektorie, die beispielsweise durch ein Ausschlagen bei einer Überfahrt über ein Schlagloch oder durch ein Bremsen des Fahrzeugs erzeugt werden kann, repräsentieren. In diesem Fall wird das Ortungssignal wie anhand der Ausweichtrajektorie beschrieben, bereitgestellt.

Die erste Fahrzeugtrajektorieninformation und/oder die zweite Fahrzeugtrajektorieninformation des Verfahrens zum Orten eines Schlaglochs kann vorteilhafterweise eine der anhand eines der vorgestellten Verfahren zum Bereitstellen einer Fahrzeugtrajektorieninformation bereitgestellte Fahrzeugtrajektorieninformation sein.

Der hier vorgestellte Ansatz schafft ferner eine Vorrichtung, die ausgebildet ist, um die Schritte einer Variante eines hier vorgestellten Verfahrens zum Orten eines Schlaglochs in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung einer Ortungseinrichtung. Hierzu kann die Vorrichtung beispielsweise auf Sensorsignale wie ein erstes Fahrzeugtrajektoriensignal, ein zweites Fahrzeugtrajektoriensignal und ein Referenztrajektoriensignal zugreifen. Die Ansteuerung erfolgt über Aktoren wie eine Fahrzeugtrajektorienschnittstelle, eine Referenztrajektorienschnittstelle und eine Vergleichseinheit.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Szenarios zum Orten eines Schlaglochs gemäß einem Ausführungsbeispiel;
Fig. 2 ein Ablaufdiagramm eines Verfahrens zum Bereitstellen einer Fahrzeugtrajektorieninformation gemäß einem Ausführungsbeispiel;
Fig. 3 ein Ablaufdiagramm eines Verfahrens zum Orten eines Schlaglochs gemäß einem Ausführungsbeispiel;
Fig. 4 eine schematische Darstellung einer Vorrichtung zum Bereitstellen einer Fahrzeugtrajektorieninformation gemäß einem Ausführungsbeispiel; und
Fig. 5 eine schematische Darstellung einer Vorrichtung zum Orten eines Schlaglochs gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

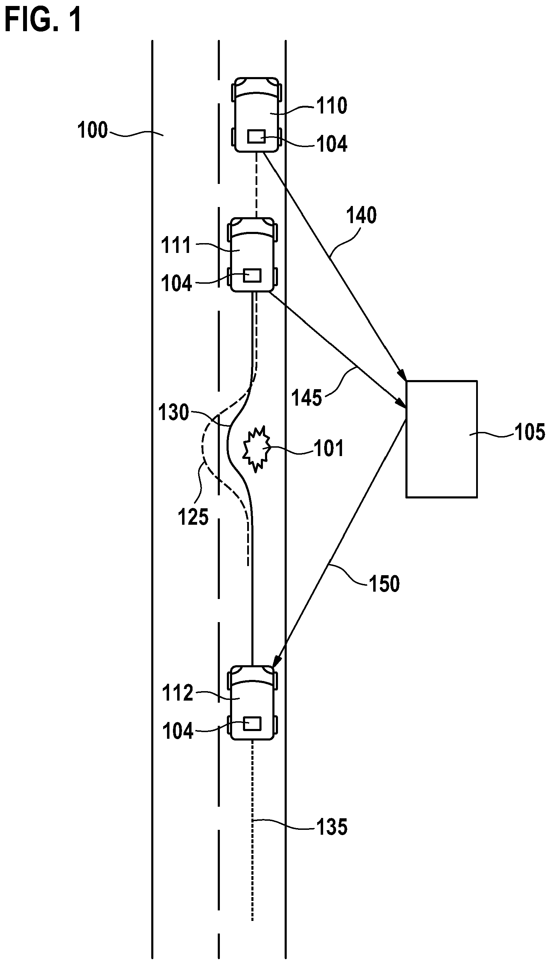

Fig. 1 zeigt eine schematische Darstellung eines Szenarios zum Orten eines sich in einer Fahrbahn 100 befindlichen Schlaglochs 101 gemäß einem Ausführungsbeispiel.

Zum Orten des Schlaglochs 101 wird ein System aus mehreren Vorrichtungen 104, 105 eingesetzt, wobei es sich bei den Vorrichtungen 104 jeweils um eine in einem Fahrzeug 110, 111, 112 angeordnete Vorrichtungen und bei der Vorrichtung 105 beispielsweise um eine stationär angeordnete Vorrichtung handelt. Die Anzahl der Vorrichtungen 104 ist dabei beliebig. Das System kann auch nur eine Vorrichtung 104 umfassen. In diesem Fall kann die Vorrichtung 105 in demselben Fahrzeug 110, 111, 112 wie die Vorrichtung 104 angeordnet sein. Die Vorrichtung 105 ist signalübertragungsfähig mit der oder den Vorrichtungen 104 verbunden, beispielsweise über eine Funkverbindung.

Gemäß diesem Ausführungsbeispiel sind drei Vorrichtungen 104 gezeigt, die an einem ersten Fahrzeug 110, einem zweiten Fahrzeug 111 und einem dritten Fahrzeug 112 angeordnet sind. Die Fahrzeuge 110, 111, 112 befahren die Fahrbahn 100, die das Schlagloch 101 aufweist. Gemäß diesem Ausführungsbeispiel haben das erste Fahrzeug 110 und das zweite Fahrzeug 111 das Schlagloch 101 bereits passiert. Eine gemäß diesem Ausführungsbeispiel gestrichelte erste Fahrzeugtrajektorie 125 des ersten Fahrzeugs 110 zeigt an, dass das erste Fahrzeug 110 im Bereich des Schlaglochs 101 eine Bewegung in Form einer Ausweichbewegung zur Vermeidung des Schlaglochs 101 ausgeführt hat. Eine gemäß diesem Ausführungsbeispiel durchgezogene zweite Fahrzeugtrajektorie 130 des zweiten Fahrzeugs 111 zeigt an, dass das zweite Fahrzeug 110 im Bereich des Schlaglochs 101 ebenfalls eine Ausweichbewegung zur Vermeidung des Schlaglochs 101 ausgeführt hat. Eine gemäß diesem Ausführungsbeispiel gepunktete dritte Fahrzeugtrajektorie 135 des dritten Fahrzeugs 112, das sich noch vor dem Schlagloch 101 befindet, verläuft momentan noch geradlinig.

Durch einen Vergleich eines sich im Bereich des Schlaglochs 101 befindlichen Abschnitts der Fahrzeugtrajektorien 125, 130 mit zumindest einer für den Fahrbahnabschnitt, in dem sich das Schlagloch 101 befindet, bestehender Referenztrajektorie, kann auf das Vorhandensein des Schlaglochs 101 zurückgeschlossen werden. Für eine entsprechende Auswertung der Fahrzeugtrajektorien 125, 130 ist die Vorrichtung 105 vorgesehen.

Anhand der Vorrichtungen 104 der Fahrzeuge 110, 112, die das Schlagloch 101 bereits passiert haben, wird im Folgenden die Ortung des Schlaglochs 101 beschrieben. Die Vorrichtungen 104 sind jeweils dazu ausgebildet, um eine Fahrzeugtrajektorieninformation 140, 145 bereitzustellen. Hierzu sind die Vorrichtungen 104 jeweils dazu ausgebildet zumindest eine Inertialinformation einzulesen, die zumindest einen Parameter einer Bewegung des jeweiligen Fahrzeugs 110, 111 während der Fahrt anzeigt. Beispielsweise wird die Inertialinformation jeweils über eine Schnittstelle zu einem Inertialsensor der Fahrzeuge 110, 111 eingelesen. Die Parameter sind gemäß diesem Ausführungsbeispiel so gewählt, dass zumindest die beschriebenen Ausweichbewegungen zum Umfahren des Schlaglochs 101 durch die Inertialinformation abgebildet werden können. Weiterhin sind die Vorrichtungen 104 dazu ausgebildet, um eine Ortsinformation einzulesen, die die Position des jeweiligen Fahrzeugs 110, 111 während der durch die Inertialinformation abgebildeten Bewegung anzeigt. Beispielsweise wird die Ortsinformation jeweils über eine Schnittstelle zu einem Positionserfassungssensor oder einem Navigationsgerät eingelesen. Jede der Vorrichtungen 104 ist ausgebildet, um unter Verwendung der jeweiligen Inertialinformation und der jeweiligen Ortsinformation eine Fahrzeugtrajektorieninformation 140, 145 zu bestimmen, durch die die Bewegung des Fahrzeugs 110, 111 im Bereich der durch die Ortsinformation definierten Position angezeigt wird. Gemäß diesem Ausführungsbeispiel ist die Vorrichtung 104 des ersten Fahrzeugs 110 dazu ausgebildet, die erste Fahrzeugtrajektorieninformation 140 bereitzustellen und die Vorrichtung 104 des zweiten Fahrzeugs 110 ist dazu ausgebildet, die zweite Fahrzeugtrajektorieninformation 145 bereitzustellen.

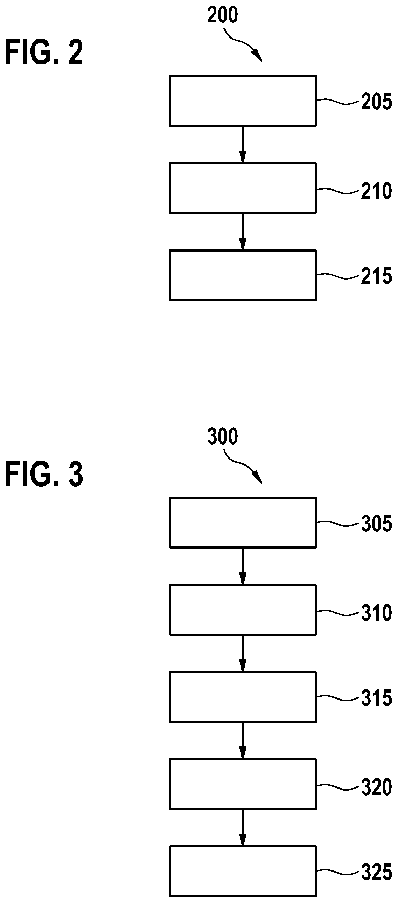

Die Vorrichtung 105 ist dazu ausgebildet, um das Schlagloch 101 anhand von Fahrzeugtrajektorieninformation 140, 145 zu orten, die von zumindest einer Vorrichtung 104 bereitgestellt wird. In dem in Fig. 1 gezeigten Szenario empfängt die Vorrichtung 105 die Fahrzeugtrajektorieninformation 140, 145 der Fahrzeuge 110, 111, die das Schlagloch 101 soeben passiert haben und verwendet diese, um das Schlagloch 101 zu orten, beispielsweise unter Durchführung eines nachfolgend anhand von Fig. 3 beschriebenen Verfahrens.

Gemäß einem Ausführungsbeispiel ist die Vorrichtung 105 dazu ausgebildet, um eine Ortungsinformation 150 bereitzustellen, die die Position eines georteten Schlaglochs 101 anzeigt. Die Ortungsinformation 150 kann beispielsweise von einem Straßenbauamt genutzt werden, um über das Schlagloch 101 informiert zu werden. Zudem kann die Ortungsinformation 150 genutzt werden, um die Fahrbahn 100 nutzende und sich dem Schlagloch 101 nähernde Fahrzeuge 112 vor dem Schlagloch 101 zu warnen.

Gemäß diesem Ausführungsbeispiel ist die Vorrichtung 104 des Fahrzeugs 112 dazu ausgebildet, um die Ortungsinformation 150 einzulesen. Diese Ortungsinformation 150 kann gemäß diesem Ausführungsbeispiel den Fahrer des dritten Fahrzeugs 112 vor dem bevorstehenden Schlagloch 101 warnen. Hierzu kann die Vorrichtung 104 und/oder eine weitere Vorrichtung, die an dem Fahrzeug 112 angeordnet ist oder angeordnet werden kann, beispielsweise eine Warneinrichtung zum Ausgeben eines akustischen und/oder visuellen Warnsignals aufweisen.

Im Folgenden wird anhand von Fig. 1 ein Ausführungsbeispiel näher beschrieben.

Durch einen Server in Form der weiteren Vorrichtung 105 werden Trajektorien in Form der ersten Fahrzeugtrajektorieninformation 140 und der zweiten Fahrzeugtrajektorieninformation 145 von Fahrzeugen 110, 111 mit Daten aus einer Inertialsensorik gesammelt. Die erste Fahrzeugtrajektorie 125 und die zweite Fahrzeugtrajektorie 130 weichen dem Schlagloch 101 aus. Gemäß einem alternativen Ausführungsbeispiel kann bei einer nicht ausweichenden Fahrzeugtrajektorie anhand einer Beschleunigung in z-Richtung, also einer vertikalen Bewegung des Fahrzeugs, auf ein Schlagloch 101 geschlossen werden.

Der vorliegende Ansatz dient zur Erkennung von Schlaglöchern 101 zur Verringerung von Kosten für Infrastrukturinstandhaltung, einer Erhöhung des Fahrkomforts und einer Verringerung des Fahrzeugverschleißes von Fahrzeugen 110,111,112. Hierzu werden Daten von beispielsweise GPS-Sensoren und Inertialsensoren, die gemäß diesem Ausführungsbeispiel von einer Fahrzeugsensorik der Vorrichtungen 104 der Fahrzeuge 110, 111, 112, oder gemäß einem alternativen Ausführungsbeispiel mittels mobiler Endgeräte erfasst wurden, von der weiteren Vorrichtung 105 eingelesen. Die weitere Vorrichtung 105 kann beispielsweise ein zentraler Server/Backend-Server sein, der die Fahrzeugtrajektorieninformationen 140, 145 sammelt, aggregiert und daraus die Position von Schlaglöchern 101 ableitet. Die Sensorik zum Erfassen der Fahrzeugtrajektorieninformationen 140, 145 kann entweder fest im Fahrzeug 110, 111, 112 verbaut sein oder aus einem mobilen Endgerät, z. B. einem Smartphone, stammen. Dabei werden Daten wie die Position, die mittels geographischer Koordinaten wie der geographische Länge und der geographische Breite (englisch: Longitude, Latitude) ermittelbar sein können, und die Bewegung, beispielsweise eine Geschwindigkeit des Fahrzeugs 110, 111, 112 und/oder Beschleunigungssignale verwendet.

Mit der Position können die Fahrzeugtrajektorieninformationen 140, 145 ermittelt werden. Durch die Aggregation vieler Fahrzeugtrajektorieninformationen 140, 145 auf dem zentralen Server kann erkannt werden, ob an gewissen Positionen beispielsweise stets ein Ausweichmanöver stattfindet. Zusätzlich kann anhand von gesammelten Geschwindigkeiten erkannt werden, ob an diesen Positionen auch eine Geschwindigkeitsreduktion stattfindet. Eine weitere Informationsquelle liefern Beschleunigungssensoren. Bei Überfahrt über ein Schlagloch 101 zeigen diese einen Ausschlag an. Über einen von der weiteren Vorrichtung 105 ausführbaren Abgleich mit vorhandenen Referenztrajektorieninformationen, beispielsweise in Form von Kartenmaterial, anhand von Fig. 3 genauer beschrieben, können bekannte Infrastrukturelemente ausgeschlossen werden. Durch die Auswertung vieler eingelesener Fahrzeugtrajektorieninformationen 140, 145 durch die weitere Vorrichtung 105 können temporäre Ereignisse ausgeschlossen werden.

Wesentliche Vorteile des Ansatzes sind, dass kein Abfahren und Überprüfen großer Teile oder der gesamten Infrastruktur durch die für die Instandhaltung von Fahrbahnen 100 zuständigen Institutionen mehr notwendig ist. Damit verbunden ist eine Kostensenkung dank niedriger Sach- und Personalkosten. Straßenschäden wie Schlaglöcher 101 erhöhen zudem die Gefahr von Verkehrsunfällen. Um diese zu vermeiden, sollten Schlaglöcher 101 frühzeitig erkannt und beseitigt werden. Der vorgestellte Ansatz ermöglicht ebendies und trägt damit zu einer erhöhten Verkehrssicherheit bei. Der individuelle Fahrer ist an Informationen wie der Ortungsinformation 150 über Schlaglöcher 101 interessiert, um evtl. seine Routenwahl über Strecken mit sehr wenigen Schlaglöchern 101 zu leiten oder um diesen rechtzeitig, d. h. vor der visuellen Wahrnehmung, auszuweichen. Dadurch wird insbesondere der Fahrkomfort erhöht und die Belastung des Fahrzeugs 110, 111, 112 vorteilhaft beeinflusst.

Fig. 2 zeigt ein Ablaufdiagramm eines Verfahrens 200 zum Bereitstellen einer Fahrzeugtrajektorieninformation gemäß einem Ausführungsbeispiel. Dabei kann es sich um ein Verfahren 200 handeln, das von einer der anhand von Fig. 1 beschriebenen Vorrichtungen ausführbar und/oder ansteuerbar ist.
In einem Schritt 205 des Einlesens wird zumindest eine Inertialinformation eingelesen, die zumindest einen Parameter einer Bewegung eines Fahrzeugs während einer Fahrt anzeigt. In einem Schritt 210 des Einlesens wird eine Ortsinformation erfasst, die die Position des Fahrzeugs während der Bewegung anzeigt. In einem letzten Schritt des Bestimmens wird die Fahrzeugtrajektorieninformation unter Verwendung der Inertialinformation und der Ortsinformation bestimmt, wobei die Fahrzeugtrajektorieninformation die Bewegung des Fahrzeugs an der Position repräsentiert.

Fig. 3 zeigt ein Ablaufdiagramm eines Verfahrens 300 zum Orten eines Schlaglochs gemäß einem Ausführungsbeispiel. Dabei kann es sich um ein Verfahren 300 handeln, das von der anhand von Fig. 1 beschriebenen weiteren Vorrichtung ausführbar und/oder ansteuerbar ist.

In einem Schritt 305 des Einlesens wird eine Fahrzeugtrajektorieninformation eingelesen, die eine erste Bewegung eines ersten Fahrzeugs an einer Position repräsentiert. In einem weiteren Schritt 310 des Einlesens wird eine zweite Fahrzeugtrajektorieninformation, die eine zweite Bewegung des ersten Fahrzeugs oder eines zweiten Fahrzeugs an der Position repräsentiert. In einem Schritt 315 des Vergleichens wird die erste Fahrzeugtrajektorieninformation mit einer Referenztrajektorieninformation verglichen, um eine erste Schlaglochinformation zu bestimmen. In einem weiteren Schritt 320 des Vergleichens wird die zweite Fahrzeugtrajektorieninformation mit der Referenztrajektorieninformation verglichen, um eine zweite Schlaglochinformation zu bestimmen. In einem letzten Schritt 325 des Bereitstellens wird eine Ortungsinformation bereitgestellt, die eine Position eines georteten Schlaglochs anzeigt, wenn die erste Schlaglochinformation und die zweite Schlaglochinformation ein Schlagloch anzeigen.

Im Folgenden wird das Verfahren 300 noch einmal detaillierter beschrieben: Zunächst werden beispielsweise auf einem zentralen Server Daten in Form der Fahrzeugtrajektorieninformationen aus GPS- und Inertialsensorik fahrtabhängig gespeichert, siehe dazu das Verfahren gemäß Fig. 2. Diese Fahrzeugtrajektorieninformationen werden für Streckenabschnitte zusammengefasst und aus den Fahrzeugtrajektorieninformationen wird eine aggregierte Trajektorie abgeleitet. Ist über mehrere Fahrzeugtrajektorieninformationen ein Ausweichen an immer der gleichen Position zu erkennen, lässt dies auf ein Schlagloch schließen. Darüber hinaus werden die Geschwindigkeitsinformationen ausgewertet. Ist an den oben beschriebenen Positionen auch eine Geschwindigkeitsreduktion über mehrere Durchfahrten zu erkennen, ist dies ein weiteres Indiz für ein Schlagloch. Einen starken Hinweis auf ein Schlagloch liefert überdies die Auswertung von der Beschleunigungssensorik des Fahrzeugs. Ist kein Ausweichmanöver, dafür aber an dieser Position ein Ausschlagen der Beschleunigungssensoren zu erkennen, deutet dieses auf ein Schlagloch hin. Daraufhin erfolgt gemäß einem Ausführungsbeispiel ein Abgleich mit vorhandenen Referenzinformationen von beispielsweise vorhandenem Kartenmaterial, um bekannte Infrastrukturelemente, wie z. B. eine Bremsschwelle oder eine Engstelle, auszuschließen. Weiterhin ist es möglich, die Sensordaten des Lenkwinkels für eine geopositionsgenaue Auslenkung zu berücksichtigen. In diesem Verfahren 300 werden nicht nur einzelne Sensorinformationen ausgewertet, sondern viele Fahrzeugtrajektorieninformationen, die beispielsweise auf dem zentralen Server gesammelt und aggregiert werden.

Ein Einsatz des vorgestellten Verfahrens kann beispielsweise in Systemen zum automatischen Fahren, in Fahrerassistenzsystemen, in der Routenplanung oder in Informationssystemen eingesetzt werden.

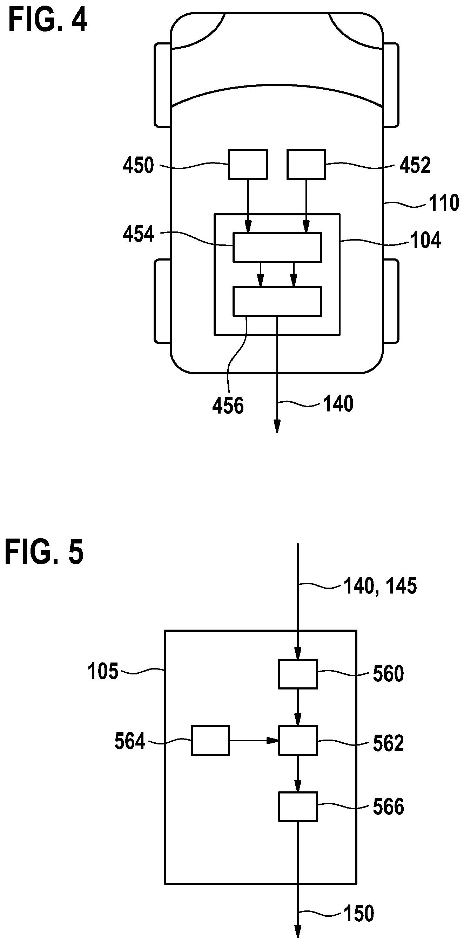

Fig. 4 zeigt ein Fahrzeug 110 mit einer Vorrichtung 104 zum Bereitstellen einer Fahrzeugtrajektorieninformation 140 gemäß einem Ausführungsbeispiel. Dabei kann es sich um ein anhand von Fig. 1 beschriebenes Fahrzeug handeln.

In dem Fahrzeug 110 ist eine Einrichtung 450 zum Erfassen und Bereitstellen einer Inertialinformation angeordnet oder integriert. Die Einrichtung 450 kann auch Teil der Vorrichtung 104 sein. Die Einrichtung 450 ist ausgebildet, um auf die Einrichtung 450 wirkende Beschleunigungen, beispielsweise in x-Richtung, und/oder in y-Richtung und/oder in z-Richtung und/oder um zumindest eine Drehachse der Vorrichtung 104 zu erfassen und als die Inertialinformation bereitzustellen.

In dem Fahrzeug 110 ist ferner eine Einrichtung 452 zum Erfassen einer Position des Fahrzeugs 110 während des Erfassens der Inertialinformation angeordnet. Die Einrichtung 452 kann auch Teil der Vorrichtung 104 sein. Die Einrichtung 452 ist ausgebildet, um die Position des Fahrzeugs 110 zu erfassen und als eine Ortsinformation bereitzustellen.

Die Vorrichtung 104 weist eine Einleseeinrichtung 454 auf, die ausgebildet ist, um die Inertialinformation und die Ortsinformation. Ferner weist die Vorrichtung 104 eine Bestimmungseinrichtung 456 auf, die ausgebildet ist, um die Inertialinformation und die Ortsinformation miteinander zu verknüpfen und aus der Verknüpfung der Inertialinformation und der Ortsinformation die Fahrzeugtrajektorieninformation 140 zu bestimmen. Die Fahrzeugtrajektorieninformation 140 zeigt eine durch die Inertialinformation definierte Bewegung des Fahrzeugs 110 in einem durch die Ortsinformation bestimmten Abschnitt einer von dem Fahrzeug 110 befahrenen Fahrbahn an.

Fig. 5 zeigt eine Vorrichtung 105 zum Orten eines Schlaglochs gemäß einem Ausführungsbeispiel. Dabei kann es sich um die anhand von Fig. 1 beschriebene Vorrichtung 105 handeln.

Die Vorrichtung 105 ist ausgebildet, um unter Verwendung von bereitgestellten Fahrzeugtrajektorieninformationen 140, 145 ein Schlagloch zu orten und eine Ortungsinformation 150 bereitzustellen, die eine Position des Schlaglochs, und optional eine Eigenschaft, wie eine Tiefe oder Größe des Schlaglochs, anzeigt.

Die Fahrzeugtrajektorieninformationen 140, 145 können von einer Vorrichtung 104 bereitgestellt werden, wie sie anhand von Fig. 4 beschrieben ist.

Die Vorrichtung 105 weist eine Einleseeinrichtung 560 auf, die ausgebildet ist, um an die Vorrichtung 105 bereitgestellte Fahrzeugtrajektorieninformation 140, 145 einzulesen. Ferner weist die Vorrichtung 105 eine Vergleichseinrichtung 562 auf, die ausgebildet ist, um die eingelesenen Fahrzeugtrajektorieninformationen 140, 145, die einem durch die Fahrzeugtrajektorieninformationen 140, 145 angezeigten Abschnitt einer Fahrbahn zugeordnet sind, mit zumindest einer Referenztrajektorieninformation zu vergleichen, die demselben Abschnitt derselben Fahrbahn zugeordnet ist. Eine Referenztrajektorieninformation kann einen Bewegungsablauf des Fahrzeugs in dem Abschnitt in Bezug auf die x-Achse, und/oder die y- Achse und/oder die z- Achse und/oder in Bezug auf zumindest eine Drehachse des Fahrzeugs repräsentieren. Gemäß diesem Ausführungsbeispiel wird die Referenztrajektorieninformation lediglich beispielhaft von einer Speichereinrichtung 564 der Vorrichtung 105 bereitgestellt. Die Vergleichseinrichtung 562 ist ausgebildet, um für jeden durchgeführten Vergleich einer Fahrzeugtrajektorieninformation 140, 145 mit der zumindest einen Referenztrajektorieninformation eine Schlaglochinformation zu bestimmen, die einen Hinweis darauf gibt, ob in dem Abschnitt der Fahrbahn ein Schlagloch vorhanden ist oder nicht.

Gemäß einem Ausführungsbeispiel repräsentiert die Referenztrajektorieninformation eine Bewegung des Referenzfahrzeugs in dem Abschnitt, wenn der Abschnitt kein Schlagloch aufweist. In diesem Fall zeigt die Schlaglochinformation dann ein Schlagloch an, wenn der in der Vergleichseinrichtung 562 durchgeführte Vergleich eine vorbestimmte Abweichung zwischen der Referenztrajektorieninformation und der jeweiligen Fahrzeugtrajektorieninformation 140, 145 anzeigt. Gemäß einem Ausführungsbeispiel handelt es sich bei der Abweichung um eine Abweichung in Bezug auf die y-Achse, die auf eine Umfahrung eines Schlaglochs schließen lässt. Gemäß einem weiteren Ausführungsbeispiel handelt es sich bei der Abweichung um eine Abweichung in Bezug auf die z-Achse und/oder eine der Drehachsen des Fahrzeugs, die auf eine Überfahrung eines Schlaglochs schließen lässt. Durch Vergleiche mit unterschiedlichen Referenztrajektorieninformationen kann anhand einer Fahrzeugtrajektorieninformation 140, 145 beispielsweise sowohl ein Ausweichen eines Schlaglochs als auch ein Durchfahren eines Schlaglochs erkannt werden.

Aus einer Größe der jeweiligen Abweichung wird gemäß einem Ausführungsbeispiel zusätzlich auf eine Eigenschaft des Schlaglochs, wie seine Größe oder Tiefe, geschlossen und als Teil der Schlaglochinformation bereitgestellt.

Alternativ repräsentiert die Referenztrajektorieninformation eine Bewegung des Referenzfahrzeugs in dem Abschnitt, wenn der Abschnitt ein Schlagloch aufweist. In diesem Fall zeigt die Schlaglochinformation dann ein Schlagloch an, wenn der in der Vergleichseinrichtung 562 durchgeführte Vergleich eine vorbestimmte Übereinstimmung zwischen der Referenztrajektorieninformation und der jeweiligen Fahrzeugtrajektorieninformation 140, 145 anzeigt.

Die Vorrichtung 105 weist ferner eine Bereitstellungseinrichtung 566 auf, die ausgebildet ist, um die Ortungsinformation 150 dann bereitzustellen, wenn aus zumindest zwei durchgeführten Vergleichen für denselben Abschnitt der Fahrbahn zwei Schlaglochinformationen hervorgegangen sind, die einen Hinweis auf ein sich in diesem Abschnitt befindliches Schlagloch geben. Optional umfasst die Ortungsinformation 150 eine Information über eine Eigenschaft des Schlaglochs, wenn diese über die Schlaglochinformationen bereitgestellt wurde.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Orten eines Schlaglochs (101), wobei das Verfahren (300) zumindest die folgenden Schritte umfasst:
Einlesen (305) einer ersten Fahrzeugtrajektorieninformation (140), die eine erste Bewegung eines ersten Fahrzeugs (110) an einer Position repräsentiert;
Einlesen (310) zumindest einer zweiten Fahrzeugtrajektorieninformation (145), die eine zweite Bewegung des ersten Fahrzeugs (110) oder eines zweiten Fahrzeugs (111) an der Position repräsentiert;
wobei das Verfahren gekennzeichnet wird durch die Schritte: Vergleichen (315) der ersten Fahrzeugtrajektorieninformation mit zumindest einer Referenztrajektorieninformation, um eine erste Schlaglochinformation zu bestimmen;
Vergleichen (320) der zweiten Fahrzeugtrajektorieninformation (145) mit der zumindest einen Referenztrajektorieninformation, um eine zweite Schlaglochinformation zu bestimmen;
Bereitstellen (325) einer Ortungsinformation (150), die eine Position eines georteten Schlaglochs (101) anzeigt, wenn die erste Schlaglochinformation und die zweite Schlaglochinformation ein Schlagloch (101) anzeigen;
wobei die zumindest eine Referenztrajektorieninformation eine Ausweichtrajektorie oder eine Schlaglochüberfahrttrajektorie repräsentiert.

2. Verfahren (300) gemäß Anspruch 1, bei dem die erste Fahrzeugtrajektorieninformation (140) und/oder die zweite Fahrzeugtrajektorieninformation (145) eine Fahrzeugtrajektorieninformation (140, 145) repräsentieren, die gemäß folgendem Verfahren (200) bereitgestellt ist:
Einlesen (205) zumindest einer Inertialinformation, die zumindest einen Parameter einer Bewegung eines Fahrzeugs (110, 111, 112) während einer Fahrt anzeigt;
Einlesen (210) einer Ortsinformation, die die Position des Fahrzeugs (110, 111, 112) während der Bewegung anzeigt; und
Bestimmen (215) der Fahrzeugtrajektorieninformation (140, 145) unter Verwendung der Inertialinformation und der Ortsinformation, wobei die Fahrzeugtrajektorieninformation die Bewegung des Fahrzeugs (110, 111,112) an der Position repräsentiert.

3. Verfahren (200) gemäß Anspruch 2, bei dem der zumindest eine Parameter eine horizontale Bewegung des Fahrzeugs (110, 111, 112) anzeigt.

4. Verfahren (200) gemäß Anspruch 1 oder 2, bei dem der zumindest eine Parameter eine vertikale Bewegung des Fahrzeugs (110, 111, 112) anzeigt.

5. Vorrichtung (104, 105), die eingerichtet ist, um Schritte der Verfahren (200, 300) gemäß der vorangegangenen Ansprüche in entsprechenden Einheiten auszuführen und/oder anzusteuern.

6. Computerprogramm, das dazu eingerichtet ist, Verfahren (200, 300) gemäß der vorangegangenen Ansprüche auszuführen und/oder anzusteuern.

7. Maschinenlesbares Speichermedium, auf dem das Computerprogramm nach Anspruch 6 gespeichert ist.

## Claims

1. Method (300) for locating a pothole (101), wherein the method (300) comprises at least the following steps:
reading in (305) first vehicle trajectory information (140) representing a first movement of a first vehicle (110) at a position;
reading in (310) at least one piece of second vehicle trajectory information (145) representing a second movement of the first vehicle (110) or of a second vehicle (111) at the position;
wherein the method is **characterized by** the steps of:
comparing (315) the first vehicle trajectory information with at least one piece of reference trajectory information in order to determine first pothole information;
comparing (320) the second vehicle trajectory information (145) with the at least one piece of reference trajectory information in order to determine second pothole information;
providing (325) locating information (150) indicating a position of a located pothole (101) if the first pothole information and the second pothole information indicate a pothole (101);
wherein the at least one piece of reference trajectory information represents an evasion trajectory or a pothole crossing trajectory.

2. Method (300) according to Claim 1, in which the first vehicle trajectory information (140) and/or the second vehicle trajectory information (145) represent vehicle trajectory information (140, 145) that is provided according to the following method (200):
reading in (205) at least one piece of inertial information indicating at least one parameter of a movement of a vehicle (110, 111, 112) during a journey;
reading in (210) location information indicating the position of the vehicle (110, 111, 112) during the movement; and
determining (215) the vehicle trajectory information (140, 145) by using the inertial information and the location information, wherein the vehicle trajectory information represents the movement of the vehicle (110, 111, 112) at the position.

3. Method (200) according to Claim 2, in which the at least one parameter indicates a horizontal movement of the vehicle (110, 111, 112).

4. Method (200) according to Claim 1 or 2, in which the at least one parameter indicates a vertical movement of the vehicle (110, 111, 112).

5. Apparatus (104, 105) configured to perform and/or control steps of the methods (200, 300) according to the preceding claims in appropriate units.

6. Computer program configured to perform and/or control methods (200, 300) according to the preceding claims.

7. Machine-readable storage medium storing the computer program according to Claim 6.

## Revendications

1. Procédé (300) de localisation d'un nid de poule (101), le procédé (300) comprenant au moins les étapes suivantes :
lecture (305) d'une première information de trajectoire de véhicule (140), laquelle représente un premier mouvement d'un premier véhicule (110) au niveau d'une position ;
lecture (310) d'au moins une deuxième information de trajectoire de véhicule (145), laquelle représente un deuxième mouvement du premier véhicule (110) ou d'un deuxième véhicule (111) au niveau de la position ;
le procédé étant **caractérisé par** les étapes suivantes :
comparaison (315) de la première information de trajectoire de véhicule avec au moins une information de trajectoire de référence afin de déterminer une première information de nid de poule ;
comparaison (320) de la deuxième information de trajectoire de véhicule (145) avec l'au moins une information de trajectoire de référence afin de déterminer une deuxième information de nid de poule ;
fourniture (325) d'une information de localisation (150) qui indique une position d'un nid de poule (101) localisé lorsque la première information de nid de poule et la deuxième information de nid de poule indiquent un nid de poule (101) ;
l'au moins une information de trajectoire de référence représentant une trajectoire d'évitement ou une trajectoire de franchissement de nid de poule.

2. Procédé (300) selon la revendication 1, avec lequel la première information de trajectoire de véhicule (140) et/ou la deuxième information de trajectoire de véhicule (145) représentent une information de trajectoire de véhicule (140, 145) qui est fournie conformément au procédé (200) suivant :
lecture (205) d'au moins une information inertielle qui indique au moins un paramètre d'un mouvement d'un véhicule (110, 111, 112) pendant un déplacement ;
lecture (210) d'une information d'emplacement qui indique la position du véhicule (110, 111, 112) pendant le mouvement ; et
détermination (215) de l'information de trajectoire de véhicule (140, 145) en utilisant l'information inertielle et l'information d'emplacement, l'information de trajectoire de véhicule représentant le mouvement du véhicule (110, 111, 112) au niveau de la position.

3. Procédé (200) selon la revendication 2, avec lequel l'au moins un paramètre indique un mouvement horizontal du véhicule (110, 111, 112).

4. Procédé (200) selon la revendication 1 ou 2, avec lequel l'au moins un paramètre indique un mouvement vertical du véhicule (110, 111, 112).

5. Dispositif (104, 105), qui est conçu pour exécuter et/ou commander les étapes du procédé (200, 300) selon les revendications précédentes dans des unités correspondantes.

6. Programme informatique qui est conçu pour mettre en œuvre et/ou commander un procédé (200, 300) selon les revendications précédentes.

7. Support d'enregistrement lisible par machine, sur lequel est enregistré le programme informatique selon la revendication 6.
